# EUROPEAN PATENT SPECIFICATION

(11) **EP 0 625 559 B1**
(45) Date of publication and mention of the grant of the patent: **03.06.1998**
(21) Application number: 94301538.8
(22) Date of filing: 03.03.1994
(51) Int. Cl.: C09K 3/10, C08J 9/30

(54) **Foamable materials, their preparation and use**
Schäumbare Materialien, deren Herstellung und Verwendung
Matériaux expansibles, leur préparation et utilisation

(30) Priority: 21.05.1993 JP 142976/93
(43) Date of publication of application: 23.11.1994
(73) Proprietor: Bridgestone Corporation, Tokyo (JP)
(72) Inventor: Hasegawa, Hajime, Chigasaki-shi, Kanagawa-ken (JP); Usami, Kazuyoshi, Yokohama-shi, Kanagawa-ken (JP)
(74) Representative: Stoner, Gerard Patrick

(56) References cited:
- GB-A- 1 009 007
- GB-A- 1 374 745
- US-A- 3 772 224
- US-A- 4 412 013

## Description

This specification relates to foamable and foam materials, e.g. such as are suitable to be put in a cavity of a pillar or another member in an automobile and heated for foaming into a polyurethane foam for sealing purposes. It also relates to the preparation and use of such materials.

Automobile center pillars and other frame members have a hollow cavity. Common practice is to fill the cavity with a foam for the purposes of preventing wind noise and absorbing vibration. The cavity is filled with a foam by various methods. For example, foam previously shaped to the cavity shape is inserted into the cavity through an access opening. Alternatively, a foamable material which is capable of foaming and expanding upon heating is placed in the cavity as a spot sealing material and later foamed to fill the cavity by heat encountered in a furnace for baking electrodeposited paint coating.

The former method of inserting a shaped foam body into a cavity, however, has the problem that the cavity is filled to a varying extent partially because of insertion through an access opening. It is difficult to completely fill the cavity along its configuration from corner to corner. The access opening which is often defined by punching out strip steel leaves a danger that the worker would have hands injured.

The latter method also suffers from several problems. The maximum volume expansion of typical sealing materials (known as spot sealing material) is generally to only twice the original volume. Where a large volume must be filled, a large amount of sealing material is needed, which increases not only cost but also weight, contrary to the general demand for lightweight automobiles and products generally.

US-A-3,772,224, US-A-4,412,013 and GB-A-1,009,007 all disclose polyurethane-based foamed materials. Various chemical compositions and manufacturing methods are used, but a common feature is that curing to form the expanded foam structure is carried out in one temporal step with only one heating stage.

The general aim here is the provision of new foamable materials, new methods of preparing foamable materials, and new methods of filling or sealing using foamable materials.

Preferred aims are to achieve a high degree of expansion, and to achieve light weight (low density) of the material.

A particular aim is the application to fill a cavity in an automobile structural member, e.g. in a pillar.

In one general aspect we propose a technique in which a liquid composition, containing polyurethane precursor compounds and a blowing agent, has bubbles of inert gas dispersed in it to give a bubbled composition. A foam stabiliser may be needed to stabilise the dispersion of inert gas bubbles. The resulting bubbled composition is then cured sufficiently to form a bubbled polyurethane material, but without or substantially without activating the blowing agent. Typically the blowing agent is adapted to be activated by heat, and the composition is cured by heat but at a temperature insufficient to activate the blowing agent.

The bubbled polyurethane is desirably a solid material which may be conveniently handleable. It may be tacky, which can be very useful in some applications. It may be provided with a release cover layer, for keeping until subsequent use.

Subsequently the bubbled polyurethane material is treated - typically by heating to a sufficient temperature - to activate the blowing agent and make a foamed material e.g. for filling and/or sealing and/or insulation of sound or other vibration, or heat. Desirably the expansion by the blowing agent is to at least twice and preferably at least five times the initial volume of the material. The polyurethane-forming composition is selected so that the bubbled material will be capable of such expansion: this can be done without difficulty on the basis of the skilled person's knowledge of such compositions, and the disclosure herein.

The density of the bubbled polyurethane is preferably not more than 1g/cm³, that of the foamed material preferably not more than 0.2g/cm³.

Specific aspects herein include the above-described method as a whole, the method of making the bubbled polyurethane material, the bubbled polyurethane material itself, the method of making the foamed material from the bubbled polyurethane material e.g. *in situ,* and the foamed material itself. Use of the material for sealing, filling or insulation is a further aspect, preferably with the foaming taking place *in situ.*

In another general aspect we propose a material which is prepared by furnishing a liquid composition comprising a compound having at least two active hydrogen atoms, an organic polyisocyanate compound, a foam stabilizer and a blowing agent, dispersing inert gas in the liquid composition e.g. by mechanical agitation, to form a bubbled composition, shaping the bubbled composition into a predetermined shape, and curing the bubbled shape at a temperature below the decomposition temperature of the blowing agent. In use the sealing material is disposed in a cavity of a pillar or another member in an automobile and heated for foaming to fill the cavity.

Preferably the material has a density of less than 1.0 g/cm³. The compound having at least two active hydrogen atoms includes at least 50 parts by-weight of a polydiene polyol or polyolefin polyol terminated with a hydroxyl group per 100 parts by weight of the compound. The liquid composition has an isocyanate index of 50 to 100.

According to another proposal, a method for providing a seal or filling in a cavity, e.g. of a pillar or another member in an automobile includes the steps of disposing a material as defined above in the cavity, and heating the sealing material at a temperature equal to or above the decomposition temperature of the blowing agent for foaming and expansion, thereby filling the cavity with the foamed product. Preferably the foamed product has a density not above 0.2 g/cm³.

The sealing material can be disposed in a cavity of a pillar or another member in an automobile and heated for foaming to fill the cavity. Since inert gas is previously dispersed through a liquid composition comprising a compound having at least two active hydrogen atoms, an organic polyisocyanate compound, a foam stabilizer, and a blowing agent by e.g. mechanical agitation, the resulting bubbled composition is lightweight and the bubbles therein are stable due to the presence of foam stabilizer. The bubbled composition is shaped into a predetermined shape, for example, a sheet and thereafter, heat cured at a temperature below the decomposition temperature of the blowing agent into a foamable shape that is the sealing material. When this foamable shape or sealing material is heated at or above the decomposition temperature of the blowing agent, for example, during a paint coat baking or drying step, the blowing agent is decomposed to incur foaming. This final foaming, coupled with the previous uniform dispersion of inert gas bubbles, ensures a high blowing magnification. Therefore, the cavity in the automobile pillar or the like can be fully filled with a small amount of the sealing material. When the compound having at least two active hydrogen atoms includes at least 50% by weight, based on the weight of the compound, of a polydiene polyol or polyolefin polyol terminated with a hydroxyl group, the composition experiences greater volume expansion by decomposition gases of the blowing agent. Better blowing properties are obtained when the liquid composition has an isocyanate index of 50 to 100.

### DETAILED DESCRIPTION

A sealing material proposed herein starts with a liquid composition comprising a compound having at least two active hydrogen atoms, an organic polyisocyanate compound, a foam stabilizer, and a blowing agent.

The compound having at least two active hydrogen atoms may be selected from liquid compounds usable, e.g. currently known for use, in the preparation of polyurethane, and reactive with organic polyisocyanate compounds. Preferred are polydienic polyols or polyolefinic polyols terminated with a hydroxyl group.

Preferred polydienic polyols terminated with a hydroxyl group are liquid ones having a number average molecular weight of 300 to 25,000, more preferably 500 to 10,000. Exemplary are diene polymers having 4 to 12 carbon atoms, diene copolymers, and copolymers of such a diene monomer with an α-olefinic addition polymerizable monomer having 2 to 22 carbon atoms. A useful polybutadiene type liquid rubber is commercially available under the trade name "Poly bd R-45HT" from Idemitsu Petro―Chemical Industry K.K.

Preferred polyolefinic polyols terminated with a hydroxyl group are as obtainable by polymerizing an aliphatic unsaturated hydrocarbon represented by the general formula CₙH₂ₙ having one carbon - to - carbon double bond in a molecule into an oligomer and introducing at least two hydroxyl groups per molecule in the oligomer by any desired method. Preferred are polyols having a polyolefinic hydrocarbon skeleton such as polyethylene, polypropylene, polybutene, and polyisobutylene and having a molecular weight of 1,000 to 5,000. Most preferably, these polyols have a hydroxyl group introduced at either end.

Such a both-ends hydroxyl - terminated poly - olefinic polyol is commercially available under the trade name "Epol" from Idemitsu Petro - Chemical Industry K.K.

Preferably the polydienic or polyolefinic polyol blended constitutes at least 50 parts by weight in 100 parts by weight of the compound having at least two active hydrogen atoms. This helps to assure adequate compression strength and appearance in the foamed product.

The organic polyisocyanate compound may be selected from compounds usable, e.g. currently known for use, in the preparation of polyurethane, for example, tolylene diisocyanate (TDI) and diphenylmethane - 4,4' - diisocyanate (MDI).

Preferably the liquid composition has an isocyanate index of 50 to 100, especially 70 to 90. Though not always, with an isocyanate index of less than 50, the bubbled composition may not be coagulative enough to shape. With an isocyanate index of more than 100, the foam shape may be too coagulative to allow full expansion, and less tacky.

In order that a bubbled composition obtained by admitting an inert gas be stable, a foam stabilizer is usually desirable. Suitable foam stabilizers are organic silicon surfactants. Suitable surfactants will be known to the skilled person. Useful organic silicon compounds are available under the trade names of L - 501, L - 520, L - 532, L - 540, L - 544, L - 3550, L - 5502, L - 5320, L - 5420, SZ - 1618, and Y - 6827 from Nippon Unicar K.K. and F - 114, F - 121, F - 305, and F - 317 from Shin-Etsu Silicone Co., Ltd. Preferably a foam stabilizer is blended in amounts of 0.1 to 5 parts, especially 0.3 to 3 parts by weight per 100 parts by weight of the compound having at least two active hydrogen atoms.

The blowing agent is preferably selected from the substances which are decomposed by heating to generate carbon dioxide, nitrogen or other gas , preferably the substances which evenly generate gases at a temperature of about 130 to 210°C. Suitable agents are known to the skilled person. Examples include azodicarbonamide, dinitrosopentamethylenetetramine, 4,4'-oxybis-benzenesulfonylhydrazide, azobisisobutyro - and para - toluenesulfonylhydrazide alone or a mixture thereof. The blowing agent is preferably blended so as to provide a blowing magnification of at least 5, especially 6 to 30.

The composition used as the raw material of the foamable shape of the present invention essentially contains the above - mentioned components while fillers, crosslinking agents, catalysts and other agents conventionally used in the preparation of polyurethane may be optionally blended.

The filler may be a conventional filler used in polyurethane, for example, calcium carbonate. It is preferred to blend less amounts of the filler in order to prevent the foamable shape from increasing its density. More particularly, the filler may be blended in amounts of 0 to 100 parts, especially 10 to 30 parts by weight per 100 parts by weight of the compound having at least two active hydrogen atoms.

Inert gas can be mechanically admixed into the liquid composition to provide a bubbled composition. Such a bubbled composition is preparable by mechanically agitating an effectively inert gas (such as air, nitrogen or other gas without adverse reaction with the system) into the liquid by high shearing means such as Hobart mixer and Oakes mixer whereby the inert gas is uniformly dispersed as bubbles in the liquid phase comprising the active hydrogen-bearing compound, isocyanate and the like. At this stage, foam stabilizer helps to keep the bubbles stable.

The amount of inert gas introduced is not critical although the inert gas is preferably introduced such that the bubbled composition may have a density of less than 1.0 g/cm³, especially 0.3 to 0.95 g/cm³.

The bubbled composition may then be shaped into a predetermined shape to form a bubbled shape, and cured at a temperature below the decomposition temperature of the blowing agent. The bubbled composition may be shaped to a configuration corresponding to the configuration of a cavity to be filled and the shaping method is not particularly limited. Often the composition is shaped into a sheet, for example, by passing the composition between spaced rollers along with release paper.

The bubbled shape should be cured at a temperature below the decomposition temperature of the blowing agent. Such curing is generally effected at about 40 to 90°C for about 5 to 20 minutes. The bubbled shape after curing can constitute a sealing material.

On use, the sealing material is disposed in a cavity to be filled and then heated at a temperature equal to or above the decomposition temperature of the blowing agent whereby the sealing material is foamed and expanded to fill the cavity therewith. For example, a predetermined amount of the sealing material is disposed in a cavity in an automobile pillar whereupon the material is foamed and expanded concurrently with the drying or baking step of electrodeposited paint coating. The cavity is thus filled with the foamed product. Preferably the foamed product has a density of up to 0.2 g/cm³.

The sealing material or cured bubbled shape may be attached to the inner wall of the cavity since it is preferably tacky. Since the sealing material is a bubbled shape having inert gas introduced therein, it is lightweight. Tackiness and light weight ensure that the sealing material, when attached to a vertical surface of the cavity inner wall, does not sag, slide down or fall down. Thus as long as the sealing material is disposed in place, the cavity can be fully filled with the foamed product.

Sealing material having such properties is advantageously used not only in filling cavities in automotive pillars and other members, but also for vibration damping in electric washing machines, refrigerators and air conditioners and for heat insulation and buffer in electric and other parts.

Such sealing material can be made with light weight and a high blowing magnification so that a large cavity can be filled with a relatively small amount (or lower weight) of the sealing material. The foamed product resulting from this material is of quality. Sealing materials and methods disclosed herein may therefore be effective in reducing weight and cost and best suited for filling cavities in automotive pillars and other members.

### EXAMPLES

Examples illustrating the present concepts and the advantages of certain preferred features thereof are given below by way of illustration and not by way of limitation. All parts are by weight.

Uniformly and finely bubbled compositions were prepared by blending a polyol, a polyisocyanate, a crosslinking agent, a catalyst, a silicone foam stabilizer, calcium carbonate, and a blowing agent as reported in Table 1 in an Oakes mixer and introducing air into the mixture while agitating.

Each bubbled composition was applied on release paper to a thickness of 2 mm by means of a roller and cured at 60°C for 15 minutes to produce a foamable sheet (sealing material) having uniformly distributed cells or bubbles. The density of the sheet was measured.

The foamable sheet was heated in a constant temperature over at 170°C for 15 minutes to produce a foamed product. The foamed product was measured for blowing magnification, density and compression strength. The outer appearance was visually observed. The criteria for judging compression strength and appearance are shown below.

### Compression strength

- ⓞ :: very strong
- ○ :: strong
- × :: easily collapsed by force

### Appearance

- ○ :: good
- Δ :: flattened and spread
- × :: tacky surface, coarse cells

The results are shown in Table 1. The Reference Example is a rubber-based foamed sealing material commercially available under the trade name of Therma-beta from Nitto Denko K.K.

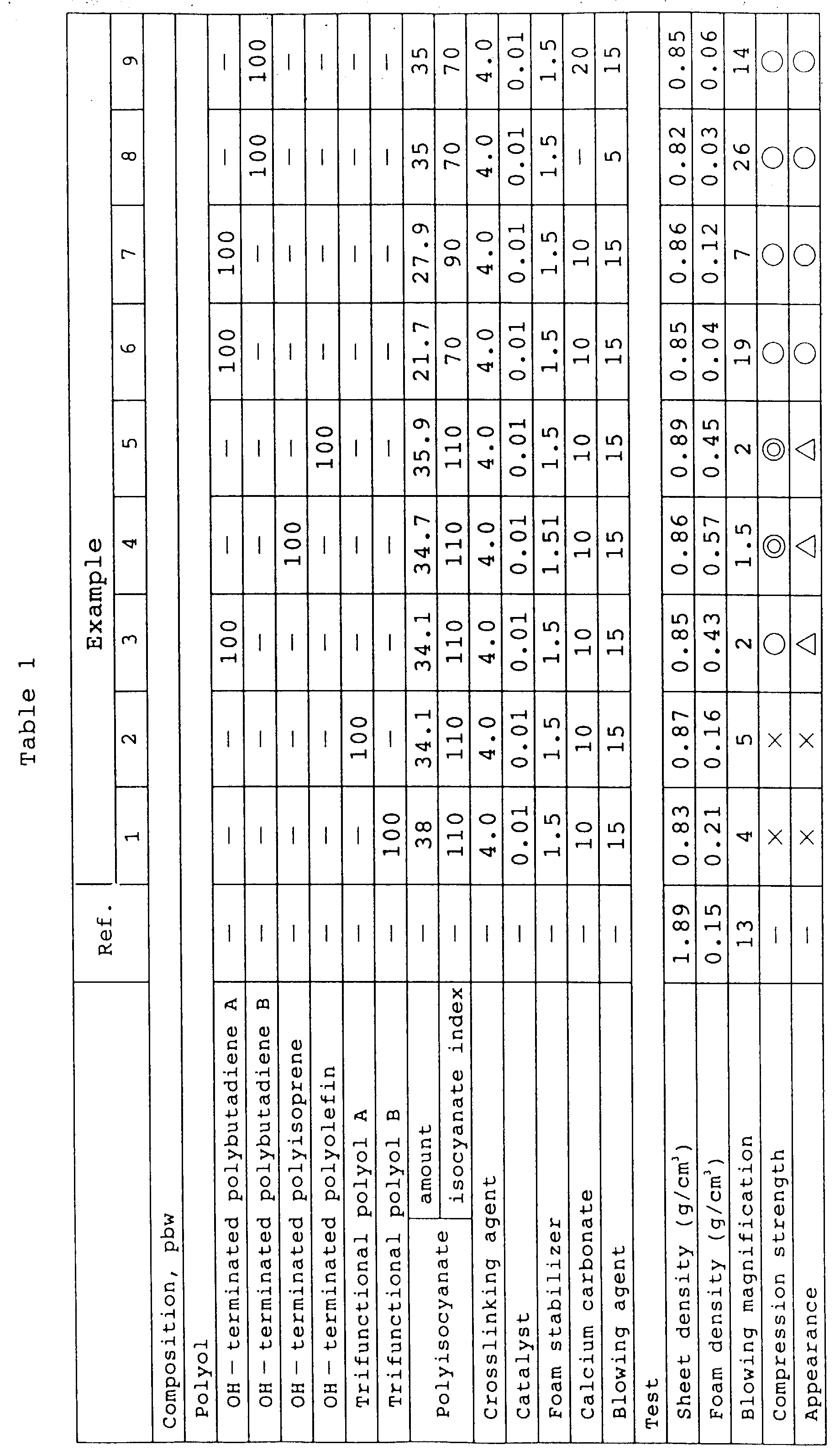

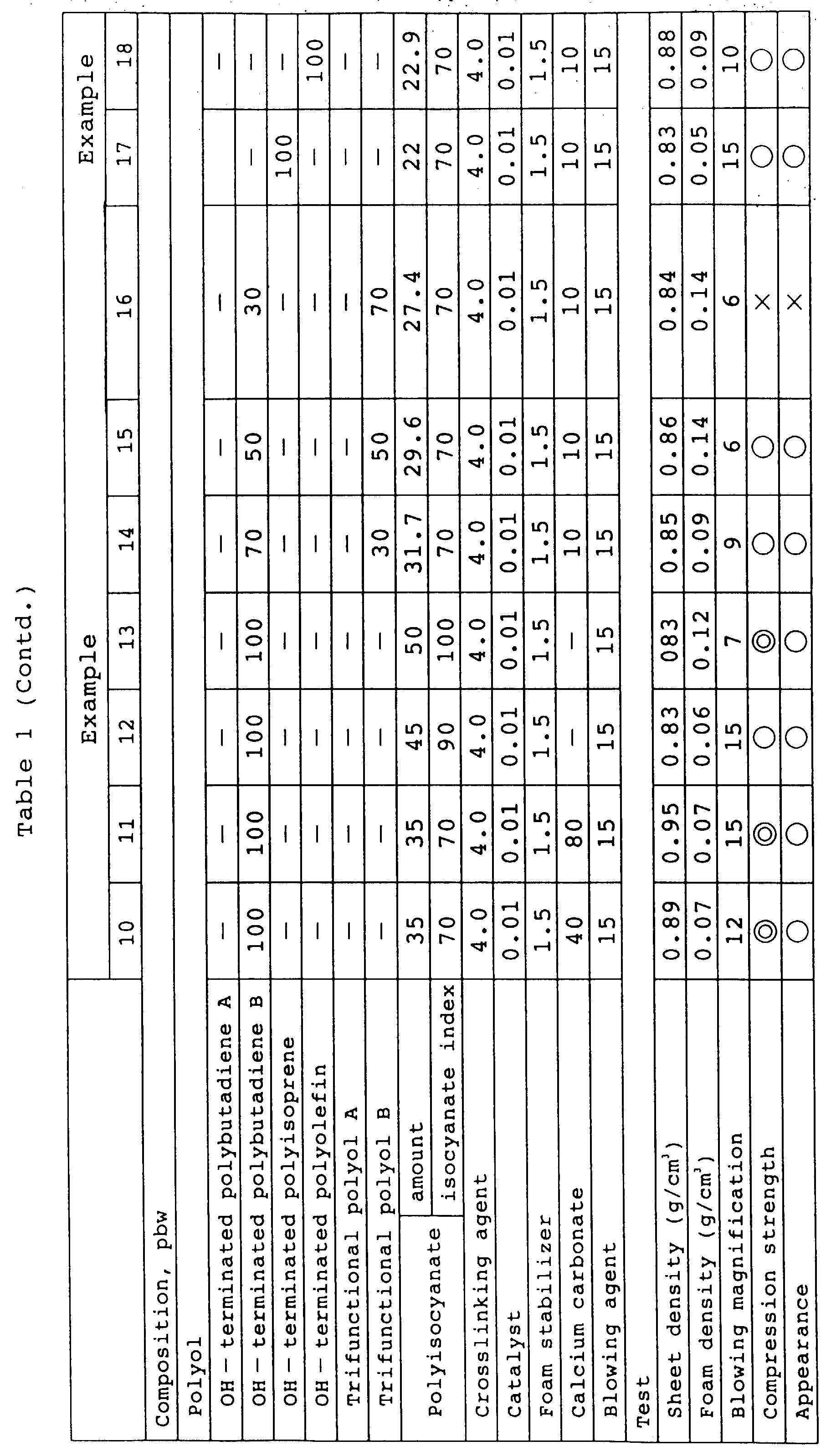

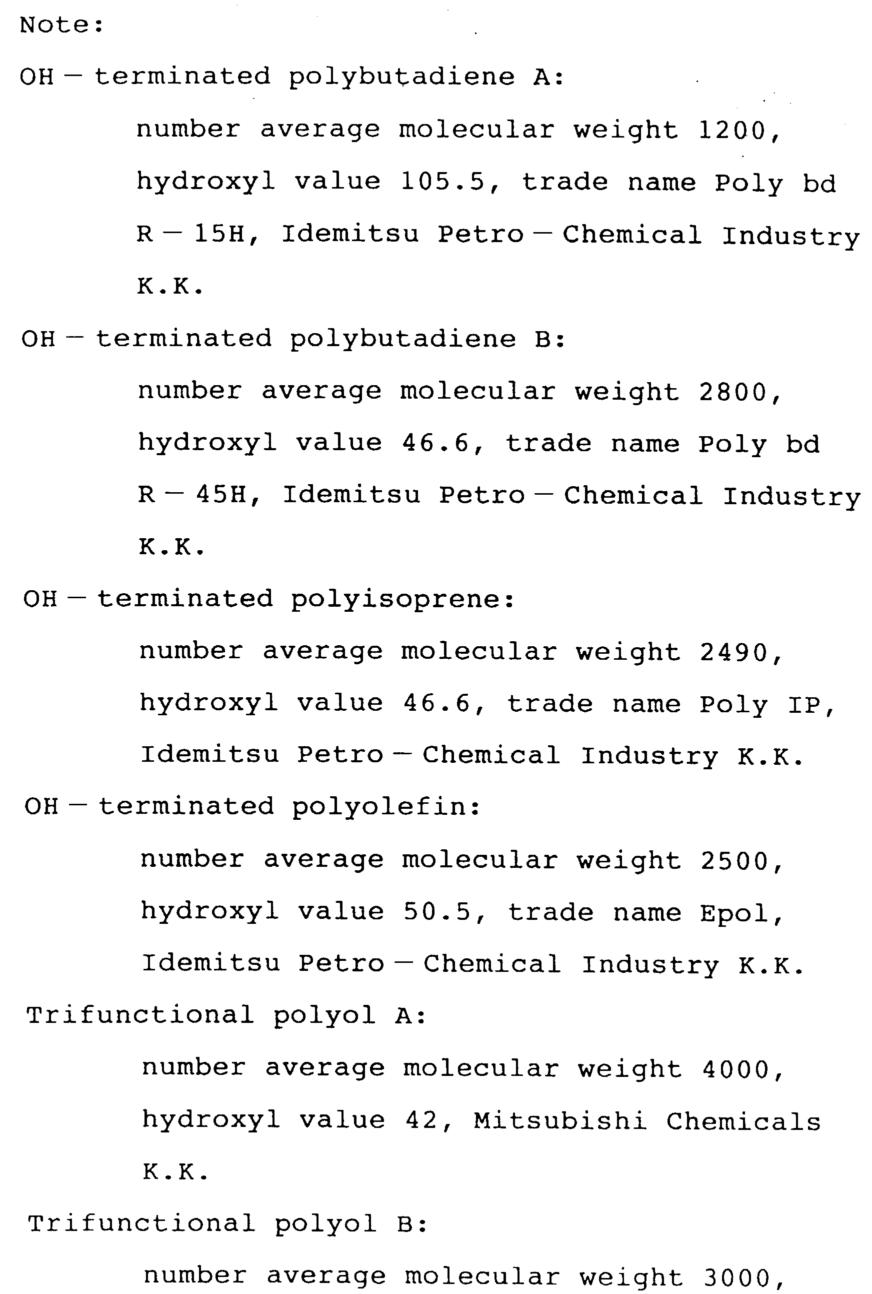

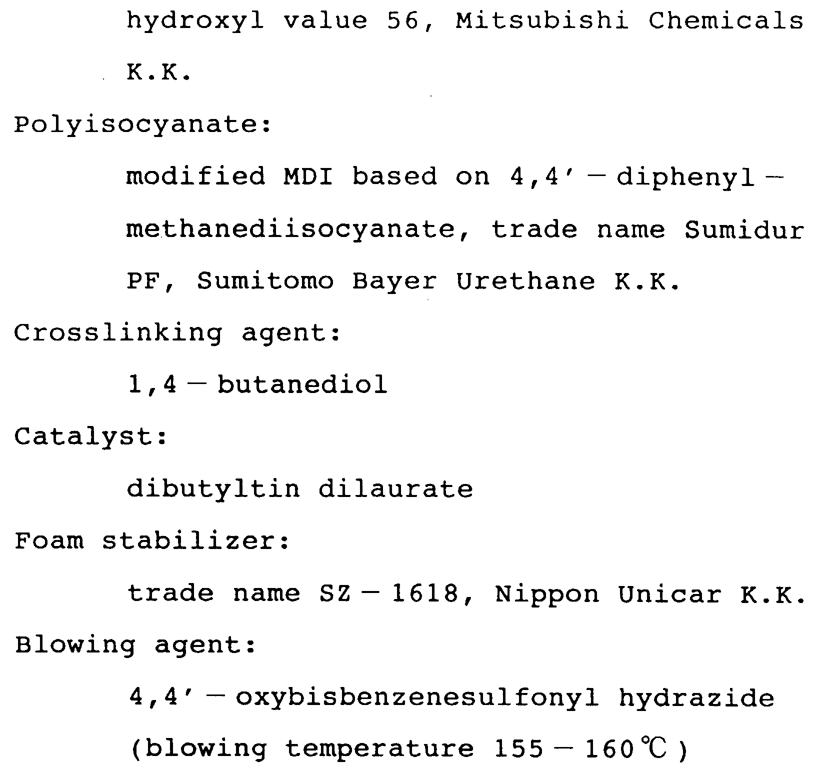

The foamed products of 30 mm thick obtained in Examples 6 and 8 were measured for percent absorption of perpendicularly incident sound to find that they had better sound absorption over a wider frequency range than a conventional flexible polyurethane foam (specific gravity 0.02, 25% hardness 2 kgf). The foamed product obtained in Example 8 was measured for transmission loss to find that it had an equivalent transmission loss over a wider frequency range as compared with a conventional asphalt ― urethane integrally foamed product (density 0.1 g/cm³, 25% hardness 60 kgf).

## Claims

1. A sealing material which foams upon heating, for use in filling a cavity of a pillar or another member in an automobile, said sealing material being prepared by a process comprising the steps of
furnishing a liquid composition comprising a compound having at least two active hydrogen atoms, an organic polyisocyanate compound, a foam stabilizer, and a blowing agent, and
uniformly dispersing an inert gas in the liquid composition by mechanical agitation to form a bubbled composition,
characterised in that
the bubbled composition is shaped into a predetermined shape and heat cured at a temperature below the decomposition temperature of said blowing agent to produce said foamable sealing material.

2. A sealing material according to claim 1 in which the heat-cured predetermined shape is tacky.

3. A sealing material according to claim 2 in which the tacky sealing material is provided with a release cover layer.

4. A sealing material according to any one of the preceding claims wherein said blowing agent is adapted to generate gas at a temperature in the range 130 to 210°C.

5. A sealing material according to one of the preceding claims wherein said compound having at least two active hydrogen atoms includes at least 50 parts by weight of a polydiene polyol or polyolefin polyol terminated with a hydroxyl group per 100 parts by weight of said compound.

6. A sealing material according to any one of the preceding claims wherein said liquid composition has an isocyanate index of 50 to 100.

7. A sealing material according to any one of the preceding claims which has a density of less than 1.0 g/cm³.

8. A sealing material according to any one of the preceding claims wherein the blowing agent provides a blowing magnification of at least 5.

9. A sealing material according to any one of the preceding claims wherein the blowing agent is azodicarbonamide, dinitrosopentamethylenetetramine, 4,4'-oxybisbenzenesulfonylhydrazide, azobisisobutyro-nitrile, and para-toluenesulfonylhydrazide alone or a mixture thereof.

10. A method for providing a seal in a cavity of a pillar or another member in an automobile, comprising the steps of disposing a sealing material according to any one of claims 1 to 9 in the cavity and heating the sealing material at a temperature equal to or above the decomposition temperature of the blowing agent for foaming and expansion, thereby filling the cavity with the foamed product.

11. A method according to claim 10 wherein said heating of said sealing material produces said foamed product having a density of up to 0.2 g/cm³.

## Patentansprüche

1. Dichtungsmaterial, das beim Erhitzen aufschäumt, zum Füllen der Hohlräume von Stehern oder anderer Bauteile in einem Automobil, wobei das Dichtungsmaterial nach einem Verfahren hergestellt wird, das die folgenden Schritte umfaßt:
Bereitstellen einer flüssigen Zusammensetzung, die eine Verbindung mit zumindest zwei aktiven Wasserstoffatomen, eine organische Polyisocyanat-Verbindung, einen Schaumstabilisator und ein Treibmittel umfaßt, und
gleichmäßiges Dispergieren eines Inertgases in der flüssigen Zusammensetzung durch mechanisches Rühren, um eine mit Bläschen durchsetzte Zusammensetzung zu bilden,
dadurch gekennzeichnet, daß die mit Bläschen durchsetzte Zusammensetzung zur Herstellung des aufschäumbaren Dichtungsmaterials zum einem vorbestimmten Formkörper geformt und bei einer Temperatur unterhalb der Zersetzungstemperatur des Treibmittels wärmegehärtet sind.

2. Dichtungsmaterial nach Anspruch 1, worin der wärmegehärtete vorbestimmte Formkörper klebrig ist.

3. Dichtungsmaterial nach Anspruch 2, worin das klebrige Dichtungsmaterial mit einer abziehbaren Deckschicht versehen ist.

4. Dichtungsmaterial nach einem der vorhergehenden Ansprüche, worin das Treibmittel so beschaffen ist, daß es bei einer Temperatur im Bereich von 130-210°C Gas erzeugt.

5. Dichtungsmaterial nach einem der vorhergehenden Ansprüche, worin die Verbindung mit zumindest zwei aktiven Wasserstoffatomen zumindest 50 Gewichtsteile eines Polydienpolyols oder Polyolefinpolyols mit Hydroxyl-Endgruppen pro 100 Gewichtsteile der Verbindung enthält.

6. Dichtungsmaterial nach einem der vorhergehenden Ansprüche, worin die flüssige Zusammensetzung einen Isocyanat-Index von 50 bis 100 aufweist.

7. Dichtungsmaterial nach einem der vorhergehenden Ansprüche, das eine Dichte von weniger als 1,0 g/cm³ besitzt.

8. Dichtungsmaterial nach einem der vorhergehenden Ansprüche, worin das Treibmittel eine Auftreibvergrößerung von zumindest 5 ergibt.

9. Dichtungsmaterial nach einem der vorhergehenden Ansprüche, worin das Treibmittel Azodicarbonamid, Dinitrosopentamethylentetramin, 4,4'-Oxybisbenzolsulfonylhydrazid, Azobisisobutyronitril und p-Toluolsulfonylhydrazid alleine oder ein Gemisch davon ist.

10. Verfahren zur Bildung einer Dichtung in einem Hohlraum eines Stehers oder eines anderen Bauteils in einem Automobil, umfassend die Schritte des Einbringens eines Dichtungsmaterials nach einem der Ansprüche 1 bis 9 in den Hohlraum und des Erhitzens des Dichtungsmaterials auf eine Temperatur, die der Zersetzungstemperatur des Treibmittels entspricht oder darüber liegt, um Aufschäumen und Ausdehnung herbeizuführen, wodurch der Hohlraum mit dem aufgeschäumten Produkt gefüllt wird.

11. Verfahren nach Anspruch 10, worin das Erhitzen des Dichtungsmaterials das aufgeschäumte Produkt mit einer Dichte von bis hinauf zu 0,2 g/cm³ ergibt.

## Revendications

1. Matériau d'étanchéité qui mousse lors du chauffage, pour l'utilisation dans le remplissage d'une cavité d'un montant ou d'une autre partie d'une automobile, ledit matériau d'étanchéité étant préparé par un procédé comprenant les étapes
de fourniture d'une composition liquide comprenant un composé ayant au moins deux atomes d'hydrogène actifs, un composé organique de polyisocyanate, un stabilisant de mousse et un agent gonflant, et
de dispersion uniforme d'un gaz inerte dans la composition liquide par agitation mécanique pour former une composition à bulles,
caractérisé en ce que
la composition à bulles est formée ou façonnée en un produit de forme prédéterminée et cuite par chauffage à une température inférieure à la température de décomposition dudit agent gonflant pour produire ledit matériau d'étanchéité expansible.

2. Matériau d'étanchéité selon la revendication 1, dans lequel le produit de forme prédéterminée, cuit par chauffage, est collant.

3. Matériau d'étanchéité selon la revendication 2, dans lequel ledit matériau d'étanchéité collant est muni d'une couche superficielle de séparation.

4. Matériau d'étanchéité selon l'une quelconque des revendications précédentes, dans lequel ledit agent gonflant est adapté à générer du gaz à une température dans l'intervalle de 130 à 210°C.

5. Matériau d'étanchéité selon l'une quelconque des revendications précédentes, dans lequel ledit composé ayant au moins deux atomes d'hydrogène actifs inclut au moins 50 parties en poids d'un polyol de polydiène ou d'un polyol de polyoléfine terminé avec un radical hydroxyle par 100 parties en poids dudit composé.

6. Matériau d'étanchéité selon l'une quelconque des revendications précédentes, dans lequel ladite composition liquide a un indice d'isocyanate de 50 à 100.

7. Matériau d'étanchéité selon l'une quelconque des revendications précédentes, qui a une densité inférieure 1,0 g/cm³.

8. Matériau d'étanchéité selon l'une quelconque des revendications précédentes, dans lequel l'agent gonflant fournit une amplification par gonflement ou soufflage d'au moins 5.

9. Matériau d'étanchéité selon l'une quelconque des revendications précédentes, dans lequel l'agent gonflant est l'azodicarbonamide, la dinitrosopentaméthylènetétramine, le 4,4'-oxybis-benzènesulfonylhydrazide, l'azobisisobutyronitrile, et le para-toluènesulfonylhydrazide, seuls ou en mélanges.

10. Procédé pour fournir le remplissage de la cavité d'un montant ou d'une autre partie d'une automobile, comprenant les étapes de disposition d'un matériau d'étanchéité selon l'une quelconque des revendications 1 à 9 dans la cavité et le chauffage du matériau d'étanchéité à une température égale ou supérieure à la température de décomposition de l'agent gonflant pour mousser et expanser, remplissant ainsi la cavité avec le produit expansé.

11. Procédé selon la revendication 10, dans lequel le chauffage dudit matériau d'étanchéité produit ledit produit expansé ayant une densité allant jusqu'à 0,2 g/cm³.
